# EUROPÄISCHE PATENTSCHRIFT

(11) **EP 1 079 641 B1**
(45) Veröffentlichungstag und Bekanntmachung des Hinweises auf die Patenterteilung: **09.04.2014**
(21) Anmeldenummer: 00250282.1
(22) Anmeldetag: 23.08.2000
(51) Int. Cl.: H04W 4/14, H04L 29/08

(54) **SMS-gestütztes Verfahren zur Online-/Offline-Erkennung von Benutzergruppen in Mobilfunknetzen**
Method for SMS-supported online-offline notification of user groups in mobile radio systems
Procédé de notification de l'état "en-ligne"-"hors ligne" pour groupes d'abonnés mobiles par le service de messages courts (SMS)

(30) Priorität: 24.08.1999 DE 19941164
(43) Veröffentlichungstag der Anmeldung: 28.02.2001
(73) Patentinhaber: Vodafone Holding GmbH, 40213 Düsseldorf (DE)
(72) Erfinder: Wiedemann, Robert, Dipl.-Wirtsch.-Ing., 40545 Düsseldorf (DE); Wierzbitzki, Dirk. Dipl.-Ing, 40885 Ratingen (DE)
(74) Vertreter: Meissner, Peter E.

(56) Entgegenhaltungen:
- WO-A-98/09464
- WO-A-99/34628

## Beschreibung

Die Erfindung betrifft Verfahren und Vorrichtungen zur Information eines Teilnehmers einer in ein Mobilfunknetz eingebuchten ersteren Mobilfunkteilnehmer-Identifikationskarte über ebenfalls in ein Mobilfunknetz eingebuchte weitere Mobilfunkteilnehmer-Identifikationskarten, wobei eine Information an die erste Mobilfunkteilnehmer-Identifikationskarte darüber veranlaßt wird, welche der weiteren Mobilfunkteilnehmer-Identifikationskarten aktuell in ein Mobilfunknetz eingebucht sind.

Ein Verfahren dieser Art ist aus der WO 99/34628 A bekannt.

Ferner ist es aus der WO 98/09464 A bekannt, SMS zu verwenden, um den Einbuchungszustand eines Mobilfunkteilnehmers festzustellen.

Aufgabe der vorliegenden Erfindung ist, die Information eines in ein Mobilfunknetz eingebuchten Mobilfunkteilnehmers hinsichtlich ebenfalls in ein Mobilfunknetz über ihre Mobilfunkteilnehmer-Identifikationskarte eingebuchter Mobilfunkteilnehmer, insbesondere dabei auch in das Internet/WAP eingebuchter Mobilfunkteilnehmer, möglichst einfach, kostengünstig und effizient zu ermöglichen. Die Aufgabe wird durch die unabhängigen Ansprüche gelöst.

Erfindungsgemäße Verfahren und Vorrichtungen erlauben einfach, effizient, kostengünstig und benutzerfreundlich die Information eines Mobilfunkendgerät-Nutzers (mit einem Mobilfunkendgerät und einer ersteren Mobilfunkteilnehmer-Identifikationskarte) über ebenfalls in ein Mobilfunknetz eingebuchte weitere Mobilfunkteilnehmer. Dies ermöglicht insbesondere effiziente Anzeige weiterer Mobilfunkteilnehmer-Identifikationskarten, welche in das Internet über WAP eingebucht sind. Aufgrund dieser Information hat ein Mobilfunkendgerät-Nutzer (mit der ersteren Mobilfunkteilnehmer-Identifikationskarte) einen Überblick über eingebuchte weiterer Mobilfunkteilnehmer-Identifikationskarten von Kollegen, Freunden etc.

Das Verfahren eignet sich für Mobilfunkteilnehmer-Identifikationskarten und Endgeräte, welche für WAP geeignet oder freigeschaltet sind.

Zweckmäßig erfolgt die Abfrage, ob eine weitere Mobilfunkteilnehmer-Identifikationskarte jeweils in das Mobilfunknetz eingebucht ist mittels einer leeren (textlosen) Mobilfunk-Kurznachricht. Die Übermittlung der Mobilfunkkurznachricht kann nach GSM-Standard, GPRS, UMTS-Standard oder anderen jeweils lokal definierten Standards erfolgen. Eine Mobilfunkkurznachricht kann insbesondere eine standardisierte SMS-MT mit Quittierungsanforderung sein.

Vorzugsweise wird die Feststellung, ob eine der weiteren Mobilfunkteilnehmer-Identifikationskarten ebenfalls in ein Mobilfunknetz (und/oder in das Internet über WAP) eingebucht ist, aufgrund der Zustellungsinformationen in Form einer Quittierung des Eingangs dieser Mobilfunkkurznachricht bei dieser weiteren Mobilfunkteilnehmer-Identifikationskarte getroffen. Alternativ oder zusätzlich ist es möglich festzustellen, welche Mobilfunkteilnehmer-Identifikationskarte ebenfalls in ein Mobilfunknetz und/oder Internet/WAP eingebucht sind, zu treffen aufgrund von (impliziten) negativen Zustellungsinformationen, wie mobilfunknetzinternen Informationen darüber, daß die Mobilfunkkurznachricht noch nicht an diese weitere Mobilfunkteilnehmer-Identifikationskarte (bzw. deren Endgerät) übermittelt wurde; hierfür kann (beispielsweise unter GSM) ein im Mobilfunknetz verwendetes Message-Waiting-Flag verwendet werden, welches gesetzt ist, solange die Mobilfunkkurznachricht noch nicht zugestellt wurde (Mobilfunkkurznachricht-Warte-Flag).

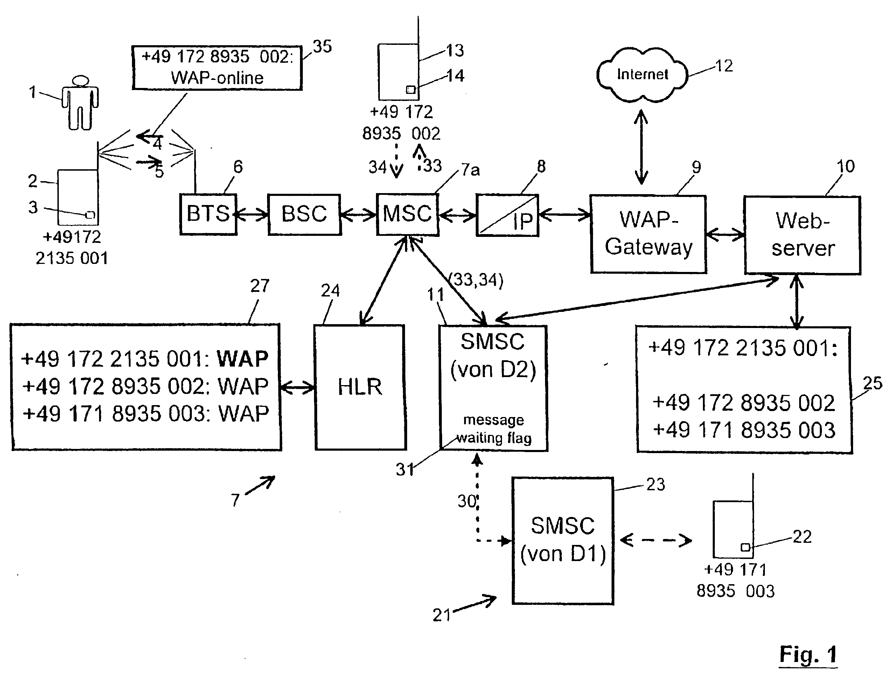

Weitere Merkmale und Vorteile der Erfindung ergeben sich aus den Ansprüchen und der nachfolgenden Beschreibung eines Ausführungsbeispiels anhand der Zeichnung. Dabei zeigt als einzige Figur
- Fig. 1: als Blockschaltbild die Information einer in einem Mobilfunknetz eingebuchten ersteren Mobilfunkteilnehmer-Identifikationskarte über ebenfalls in ein Mobilfunknetz eingebuchte weitere Mobilfunkteilnehmer-Identitifikationskarten.

Figur 1 zeigt einen Benutzer 1 eines Mobilfunkendgerätes 2 mit einer Mobilfunkteilnehmer-Identifikationskarte (= SIM) 3 (mit der Nummer +491722135001), welches per Funk 4, 5 über eine Basisstation BTS 6 in ein Mobilfunknetz 7 eingebucht ist. Das Mobilfunknetz 7 ist ein bliebiges, dem Fachmann bekanntes Mobilfunknetz (beispielsweise GSM, UMTS oder andere Mobilfunknetze) und umfaßt u.a. eine Funkschnittstelle 4, 5 zur Mobilfunkteilnehmer-Identifikationskarte 3, eine BTS 6, eine MSC 7a, eine (ebenfalls als Blockschaltbild dargestellte) Internet-Protokoll-Schnittstelleneinrichtung 8, einen WAP-Gateway-Server 9 zur Anbindung des Mobilfunknetzes 7 an das Internet 12 per WAP, einen Web-Server 10 zur Ausführung von Internet/WAP-bezogenen Funktionen (beispielsweise im NMC angeordnet), eine Mobilfunknetz-Kurznachrichtenzentrale SMSC 11 (des Mobilfunknetzes 7), ein weiteres Mobilfunkendgerät 13 mit einer weiteren Mobilfunkteilnehmer-Identifikationskarte 14, ein weiteres Mobilfunknetz 21 mit einer eigenen SMSC 23 und einer weiteren Mobilfunkteilnehmer-Identifikationskarte 22 (welche analog zu den Mobilfunkteilnehmer-Identifikationskarten 3, 4 des Mobilfunknetzes 7 in das andere Mobilfunknetz 21 eingebucht ist).

Der Mobilfunkteilnehmer 1 bucht sich mit seinem Mobilfunkendgerät 2, welches die Mobilfunkteilnehmer-Identifikationskarte 3 enthält, per Funk (über die Basisstation 4, die MSC 7a usw.) in das Mobilfunknetz 7 ein. Er möchte wissen, welche weiteren Mobilfunkteilnehmer (jeweils mit einer weiteren Mobilfunkteilnehmer-Identifikationskarte in einem Mobilfunkendgerät) seine Liste ebenfalls in einem Mobilfunknetz und evtl. dabei zusätzlich im WAP eingebucht sind. Eine derartige Information kann insbesondere unter WAP im Mobilfunkendgerät angezeigt werden. Dazu wird (hier beim Einbuchen der Mobilfunkteilnehmer-Identifikationskarte 3 in das Mobilfunknetz 7) aufgrund der Identität der Mobilfunkteilnehmer-Identifikationskarte 3 deren HLR 24 bestimmt und z.B. dort abgefragt (in einer Tabelle 27), ob für die Mobilfunkteilnehmer-Identifikationskarte 3 (mit der MSISDN +491722135001) ein WAP-Service des Mobilfunknetzes 7 abonniert ist und zu aktivieren ist. Im vorliegenden Fall ist der WAP-Service abonniert und aktiviert. Das Mobilfunknetz 7 gibt dann die Mobilfunkteilnehmer-Identifikationskarten-Nummer (+491722135001) an eine Internet-Protokoll-Schnittstelleneinrichtung 8, die die mobilfunknetzinterne Internet-Protokoll-Schnittstelle zum Internet-Protokoll IP darstellt. Von der Internet-Protokoll-Schnittstelleneinrichtung 8 wird per Internet-Protokoll die MSISDN der Karte 3 an einen WAP-Gateway 9 übermittelt. Ein mit dem WAP-Gateway verbindbarer Webserver 10 umfaßt eine Datenbank mit einer zuvor vom Nutzer erstellten und mündlich oder per Kurznachricht übermittelten Liste 25, in welcher Liste jeweils zu einer Mobilfunkteilnehmer-Identifikationskarte 3 (bzw. deren übermittelter MSISDN +491722135001) angegeben ist, welche weitere Mobilfunkteilnehmer-Identifikationskarten 14, 22 auf ihre aktuelle Einbuchung in ein Mobilfunknetz zu überprüfen sind. Der Web-Server 10 gibt die MSISDN jeweils einer auf Einbuchung in ein Mobilfunknetz (und evtl. zusätzlich in WAP) zu überprüfenden weiteren Karte 14 als Blind-Kurznachricht (= Kurznachricht ohne Text, welche beim Empfänger nicht auf dem Display angezeigt wird) an die Kurznachrichtenzentrale SMSC 11 des Mobilfunknetzes 7 weiter. Diese sendet in üblicher Weise die Kurznachricht an das Mobilfunkendgerät 13 mit der auf Einbuchung zu überprüfenden Mobilfunkteilnehmer-Identifikationskarte 14. Dazu kann über das aufgrund der MSISDN von 14 bestimmte HLR der Mobilfunkteilnehmer-Identifikationskarte 14 überprüft werden, in welchem VLR sie aktuell eingetragen ist und über welche (nicht dargestellte) BTS, BSC die Kurznachricht an die Mobilfunkteilnehmer-Identifikationskarte 14 zu senden ist. Die Mobilfunkteilnehmer-Identifikationskarte 14 erhält hier diese Kurznachricht (die am Display nicht angezeigt wird, weil sie keinen Text enthält), worauf in üblicher Weise der Eingang der Kurznachricht beim Endgerät 13 mit der Mobilfunkteilnehmer-Identifikationskarte 14 an die SMSC 11 als Quittung zurücksignalisiert wird, worauf diese (11) an den WAP-Server 10 übermittelt, daß die Mobilfunkteilnehmer-Identifikationskarte 14 aktuell im Mobilfunknetz eingebucht ist, was dem Mobilfunkteilnehmer 1 mit der Mobilfunkteilnehmer-Identifikationskarte 3 (durch eine Kurznachricht 35 an ihn etc.) angezeigt wird. Zusätzlich kann (im WAP-Server 10 etc.) geprüft werden, ob diese weitere Karte 14 auch im WAP eingebucht ist und dies dem Nutzer 1 der Karte 3 zusätzlich angezeigt werden. Entsprechend wird für die weiteren Mobilfunkteilnehmer-Identifikationskarten, welche mit ihrer MSISDN in der Liste 25 stehen, verfahren. Entweder werden erst alle Karten in der Liste 25 abgefragt und dann das Ergebnis an die Karte 3 übermittelt oder das Ergebnis laufend aktualisiert. Anstatt der Überprüfung der Quittierung kann auch mobilfunknetzintern das Message-Waiting-Flag (o.dgl. in UMTS etc.) überprüft werden, welches netzintern (in der SMSC 11) solange gesetzt ist, bis die Mobilfunkkurznachricht beim Endgerät mit der Mobilfunkteilnehmer-Identifikationskarte 14 eingegangen ist. Solange das Message-Waiting-Flag noch gesetzt ist, kann angenommen werden, daß der potentielle SMS-Empfänger bzw. seine Karte nicht in ein Mobilfunknetz eingebucht ist. Das Verfahren kann auch verwendet werden, um die Einbuchung von Mobilfunkteilnehmer-Identifikationskarten in andere Mobilfunknetze 21 (z.B. D1, E-Plus, E2 in Deutschland) als das Mobilfunknetz 7 (z.B. D2), in welches die erstere Mobilfunkteilnehmer-Identifikationskarte 3 eingebucht ist, zu überprüfen. Dies kann beispielsweise über ein SMS-Gateway 30 (und nicht dargestellte MSC usw.) zwischen dem SMSC 11 des ersteren Mobilfunknetzes 7 der erstere Mobilfunkteilnehmer-Identifikationskarte 3 und dem SMSC 23 des jeweils anderen Mobilfunknetzes 21 der weiteren Mobilfunkteilnehmer-Identifikationskarte 22 (mit MSISDN +491718935003) erfolgen. Alternativ wäre es vorstellbar, über das Internet, insbesondere per WAP 9, und das Internet-Gateway des anderen Mobilfunk-Kommunikationsnetzes 21 dieses zu veranlassen, eine Kurznachricht an die zu überprüfende weitere Mobilfunkteilnehmer-Identifikationskarte 22 zu senden.

Auf dem Mobilfunkendgerät 2 der ersteren Mobilfunkteilnehmer-Identifikationskarte 3 werden alle ihm vom WAP-Server 10 als in ein Mobilfunknetz (oder beispielsweise nur in das gleiche Mobilfunknetz) eingebucht mitgeteilten (35) Mobilfunkteilnehmer-Identifikationskarten-Identitäten (oder zugehörige Namen etc.) optisch und/oder akustisch dargestellt. Die optische Darstellung kann insbesondere in Form einer Liste auf dem Display des Mobilfunkendgerätes 2 erfolgen. Die Übermittlung zur Darstellung auf dem Endgerät 2 kann insbesondere per Kurznachricht (SMS-MT) 35 vom Web-Server 10 an die Karte 3 über die Funkstrecke 4 erfolgen.

Das Verfahren/die Vorrichtung ist insbesondere auch unter GPRS anwendbar. Zusätzlich zu unter WAP eingebuchten Internet-Nutzern können dem Endgerät-Nutzer 1 auch über das Internet ohne WAP (also über das Festnetz) eingebuchte Internet-Nutzer übermittelt (35) und angezeigt werden, die z.B. über bekannte Messager (AOL etc.) als im Internet eingeloggt detektiert (9) werden.

Es sei noch erwähnt, dass an die weiteren Mobilfunkteilnehmer-Identifikationskarten anlässlich des Einbuchens der ersten Mobilfunkteilnehmer-Identifikationskarte und/oder in bestimmten Zeitintervallen eine Mobilfunkkurznachricht zur Ermittlung der weiteren Mobilfunkteilnehmer-Identifikationskarten gesendet werden kann. Dies kann aber auch auf Anfrage des Nutzers der ersten Mobilfunkteilnehmer-Identifikationskarte geschehen.

Eingeschränkt werden kann der Kreis der weiteren Mobilfunkteilnehmer-Identifikationskarten dadurch, dass nur die angesprochen werden, die im gleichen Mobilfunknetz subskribiert sind.

Zusätzlich kann die zur Einbuchungs-Prüfung an die weitere Mobilfunkteilnehmer-Identifikationskarten übermittelte Mobilfunkkurznachricht mit einer Absender-Identität (10) übermittelt, welche vermeidet, dass die erstere Mobilfunkteilnehmer-Identifikationskarte eine Quittung über den Empfang dieser Mobilfunkkurznachricht durch die weiteren Mobilfunkteilnehmer-Identifikationskarten erhält.

Die Erfindung ist mobilfunknetzintern insbesondere mit Programmen realisierbar, jedoch weder allein hierdurch gekennzeichnet noch hierauf beschränkt.

## Patentansprüche

1. Verfahren zur Information eines Teilnehmers einer in ein Mobilfunknetz (7,21) eingebuchten (4,5,2) ersteren Mobilfunkteilnehmer-Identifikationskarte (3) über ebenfalls in ein Mobilfunknetz (7,21) eingebuchte weitere Mobilfunkteilnehmer-Identifikationskarten (14;22),
wobei eine Information (35) an die erste Mobilfunkteilnehmer-Identifikationskarte (3) darüber veranlaßt (11,10,9,8,7a,6,4) wird, welche (14) der weiteren Mobilfunkteilnehmer-Identifikationskarten (14;22) aktuell in ein Mobilfunknetz (7;21) eingebucht sind,
**dadurch gekennzeichnet,**
**dass** an die weiteren Mobilfunkteilnehmer-Identifikationskarten (14;22) jeweils eine Mobilfunkkurznachricht (33) abgesendet (9,10,11,7a,33) wird und
aufgrund von Zustellungsinformationen (34;31), die sich aus der Zustellung der Mobilfunkkurznachricht an die weiteren Mobilfunkteilnehmer-Identifikationskarten (14;22) ergeben, festgestellt wird, welche der weiteren Mobilfunkteilnehmer-Identifikationskarten (14;22) ebenfalls in ein Mobilfunknetz (7;21) eingebucht sind, dies dem Mobilfunkteilnehmer mit der ersten Mobilfunkteilnehmer-Identifikationskarte (3) angezeigt wird und
**dass** zusätzlich von einem Web Server geprüft wird, ob die weitere Mobilfunkteilnehmer-Identifikationskarte (14;22) auch im WAP eingebucht ist, wobei dies dem Mobilfunkteilnehmer mit der ersten Mobilfunkteilnehmer-Identifikationskarte (3) ebenfalls mitgeteilt wird.

2. Verfahren nach einem der vorhergehenden Ansprüche,
**dadurch gekennzeichnet,**
**dass** die weiteren Mobilfunkteilnehmer-Identifikationskarten (14;22), an welche eine Mobilfunkkurznachricht zu senden ist, aufgrund einer hierfür gespeicherten, die erstere Mobilfunkteilnehmer-Identifikationskarte (3) betreffende Liste (25) bestimmt werden.

3. Verfahren nach Anspruch 2,
**dadurch gekennzeichnet,**
**dass** die Liste vom Nutzer (1) der Mobifunkteilnehmer-Identifikationskarte (3) zuvor erstellt und dann in das Mobilfunknetz (10 oder 24) mündlich oder per Kurznachricht übermittelt wird.

4. Verfahren nach einem der vorhergehenden Ansprüche,
**dadurch gekennzeichnet,**
**dass** an die weitere Mobilfunkteilnehmer-Identifikationskarten (14;22) anläßlich des Einbuchens der ersteren Mobilfunkteilnehmer-Identifikationskarte (3) und/oder in bestimmten Zeitintervallen eine Mobilfunkkurznachricht (33) zur Ermittlung der weiteren Mobilfunkteilnehmer-Identifikationskarten gesendet wird.

5. Verfahren nach einem der vorhergehenden Ansprüche,
**dadurch gekennzeichnet,**
**dass** an die weitere Mobilfunkteilnehmer-Identifikationskarten (14;22) auf Anfrage des Nutzers (1) der ersteren Mobilfunkteilnehmer-Identifikationskarte (3) eine Mobilfunkkurznachricht gesendet wird.

6. Verfahren nach einem der vorstehenden Ansprüche,
**dadurch gekennzeichnet,**
**dass** nur an weitere Mobilfunkteilnehmer-Identifikationskarten eine Mobilfunkkurznachricht gesendet wird, die im gleichen Mobilfunknetz (7) subskribiert sind wie die erste Mobilfunkteilnehmer-Identifikationskarte (3).

7. Verfahren nach einem der Ansprüche 1 bis 6,
**dadurch gekennzeichnet,**
**dass** auch an weitere Mobilfunkteilnehmer-Identifikationskarten (22) eine Mobilfunkkurznachricht gesendet wird, die in anderen Mobilfunknetzen (21) als das Mobilfunknetz (7) der ersteren Mobilfunkteilnehmer-Identifikationskarte (3) subskribiert sind.

8. Verfahren nach einem der vorhergehenden Ansprüche,
**dadurch gekennzeichnet,**
**dass** die Mobilfunkkurznachricht eine GSM-SMS ist.

9. Verfahren nach einem der vorhergehenden Ansprüche,
**dadurch gekennzeichnet,**
**dass** die Mobilfunkkurznachricht eine UMTS-Nachricht ist.

10. Verfahren nach einem der vorhergehenden Ansprüche,
**dadurch gekennzeichnet,**
**dass** die Mobilfunkkurznachricht (33) eine leere Nachricht ohne mobilfunkendgerätseitig darzustellenden Text ist.

11. Verfahren nach einem der vorhergehenden Ansprüche,
**dadurch gekennzeichnet,**
**dass** eine der weiteren Mobilfunkteilnehmer-Identifikationskarten als in ein Mobilfunknetz eingebucht betrachtet wird, wenn eine Zustellungsinformation in Form einer automatisch generierten Empfangsquittung betreffend ihren Erhalt seitens dieser weiteren Mobilfunkteilnehmer-Identifikationskarte (14,13) in Richtung der ersteren Mobilfunkteilnehmer-Identifikationskarte zurückgesendet (14,34,7a,11) wird.

12. Verfahren nach einem der vorhergehenden Ansprüche 1-10,
**dadurch gekennzeichnet,**
**dass** eine der weiteren Mobilfunkteilnehmer-Identifikationskarten nur dann als nicht in ein Mobilfunknetz eingebucht betrachtet wird, wenn eine Zustellungsinformation in Form eines Status-Flags (31) vorliegt (11), welches angibt, dass die Mobilfunkkurznachricht noch nicht diese weitere Mobilfunkteilnehmer-Identifikationskarte erreicht hat, insbesondere in Form des Message-Waiting-Flags in GSM oder UMTS,
während die weitere Mobilfunkteilnehmer-Identifikationskarte sonst als eingebucht betrachtet (35) wird.

13. Verfahren nach einem der vorhergehenden Ansprüche,
**dadurch gekennzeichnet,**
**dass** die weiteren Mobilfunkteilnehmer-Identifikationskarten im Verfahren jeweils aufgrund einer Identitäts-Nummer, insbesondere ihrer Telefonnommer MSISDN an die die Mobilfunkkurznachricht gesendet wird, identifiziert werden.

14. Verfahren nach einem der vorhergehenden Ansprüche,
**dadurch gekennzeichnet,**
**dass** die Information der ersten Mobilfunkteilnehmer-Identifikationskarte (3) über aktuell in ein Mobilfunknetz eingebuchte weitere Mobilfunkteilnehmer-Identifikationskarten mit einer am Endgerät der ersten Mobilfunkteilnehmer-Identifikationskarte optisch und/oder akustisch dem Endgerätnutzer (1) anzuzeigenden Mobilfunkkurznachricht (35) erfolgt.

15. Verfahren nach einem der vorhergehenden Ansprüche,
**dadurch gekennzeichnet,**
**dass** die zur Einbuchungs-Prüfung an die weitere Mobilfunkteilnehmer-Identifikationskarten übermittelte Mobilfunkkurznachricht mit einer Absender-Identität (10) übermittelt wird, welche vermeidet, dass die erstere Mobilfunkteilnehmer-Identifikationskarte eine Quittung über den Empfang dieser Mobilfunkkurznachricht durch die weiteren Mobilfunkteilnehmer-Identifikationskarten erhält.

16. Vorrichtung zur Durchführung des Verfahrens nach einem der vorhergehenden Ansprüche, zur Information (35) eines Teilnehmers einer in ein Mobilfunknetz (7,14) eingebuchten (4,5) ersteren Mobilfunkteilnehmer-Identifikationskarte (3) über ebenfalls in ein Mobilfunknetz eingebuchte weitere Mobilfunkteilnehmer-Identifikationskarten (14;22)
- mit einem Web-Server (10) als Mobilfunkteilnehmer- Informationseinrichtung zum Informieren der ersten Mobilfunkteilnehmer-Identifikationskarte (3) über mit der Zustellungsinformations-Überwachungseinrichtung festgestellten, in ein Mobilfunknetz eingebuchten weiteren Mobilfunkteilnehmer-Identifikationskarten, **gekennzeichnet durch**,
- den Web-Server (10) als Mobilfunkkurznachrichten- Generationseinrichtung zum Generieren von Mobilfunkkurznachrichten an jede der weiteren Mobilfunkteilnehmer-Identifikationskarten (14;22) und zum Absenden dieser Mobilfunkkurznachrichten an diese weiteren Mobilfunkteilnehmer-Identifikationskarten,
- mit dem Web-Server (10) als Zustellungsinformationen-Überwachungseinrichtung zum Feststellen in ein Mobilfunknetz eingebuchter weiterer Mobilfunkteilnehmer-Identifikationskarten aufgrund von Zustellungsinformationen (34;31),die sich aus der Zustellung obiger Mobilfunkkurznachricht (33) an die weiteren Mobilfunkteilnehmer-Identifikationskarten (14) ergeben,
- und Weiterleitung der Information (35) an den Web Server, zur Prüfung, ob die weitere Mobilfunkteilnehmer-Identifikationskarte (14;22) auch in das WAP eingebucht ist.

17. Vorrichtung nach Anspruch 16,
**dadurch gekennzeichnet,**
**dass** die Mobilfunkkurznachrichten-Generationseinrichtung (10) so ausgebildet ist, dass die weitere Mobilfunkteilnehmer-Identifikationskarten (14;22), an die eine Mobilfunkkurznachricht zu senden ist, aufgrund einer hierfür gespeicherten Liste (25) für die erstere Mobilfunkteilnehmer-Identifikationskarte bestimmbar sind.

18. Vorrichtung nach Anspruch 17,
**dadurch gekennzeichnet,**
**dass** die Liste (25) vom Nutzer (1) der Mobilfunkteilnehmer-Identifikationskarte (3) erstellt wurde.

19. Vorrichtung nach einem der Ansprüche 16 bis 18,
**dadurch gekennzeichnet,**
**dass** an die weiteren Mobilfunkteilnehmer-Identifikationskarten beim Einbuchen der erstere Mobilfunkteilnehmer-Identifikationskarte und/oder in bestimmten Zeitintervallen eine Mobilfunkkurznachricht sendbar ist.

20. Vorrichtung nach einem der Ansprüche 16 bis 19,
**dadurch gekennzeichnet,**
**dass** die Mobilfunkkurznachrichten-Generationseinrichtung so ausgebildet ist, dass an die weitere Mobilfunkteilnehmer-Identifikationskarten auf Anfrage des Nutzers (1) der erstere Mobilfunkteilnehmer-Identifikationskarte (3) eine Mobilfunkkurznachricht gesendet wird.

21. Vorrichtung nach einem der Ansprüche 16 bis 20,
**dadurch gekennzeichnet,**
**dass** die Mobilfunkkurznachrichten-Generationseinrichtung so ausgebildet ist, dass nur an weitere Mobilfunkteilnehmer-Identifikationskarten der Liste (25) eine Mobilfunkkurznachricht gesendet wird, die im gleichen Mobilfunknetz subskribiert ist, wie die erstere Mobilfunkteilnehmer-Identifikationskarte.

22. Vorrichtung nach einem der Ansprüche 16 bis 21,
**dadurch gekennzeichnet,**
**dass** an weitere Mobilfunkteilnehmer-Identifikationskarten der Liste (25) eine Mobilfunkkurznachricht gesendet wird, die in anderen Mobilfunknetzen als die erstere Mobilfunkteilnehmer-Identifikationskarte subskribiert sind.

23. Vorrichtung nach einem der Ansprüche 16 bis 22,
**dadurch gekennzeichnet,**
**dass** die Mobilfunkkurznachricht eine GSM-SMS ist.

24. Vorrichtung nach einem der Ansprüche 16 bis 23,
**dadurch gekennzeichnet,**
**dass** die Mobilfunkkurznachricht eine UMTS-Nachricht ist.

25. Vorrichtung nach einem der Ansprüche 16 bis 24,
**dadurch gekennzeichnet,**
**dass** die Mobilfunkkurznachricht eine leere Nachricht ohne mobilfunkendgerätseitig (13) darzustellenden Text ist.

26. Vorrichtung nach einem der Ansprüche 16 bis 25,
**dadurch gekennzeichnet,**
**dass** die Zustellungsinformationen-Überwachungseinrichtung so ausgebildet ist, dass eine der weiteren Mobilfunkteilnehmer-Identifikationskarten nur als in ein Mobilfunknetz eingebucht betrachtet wird, wenn eine Zustellungsinformation in Form einer automatisch generierten Empfangsquittung über ihren Erhalt durch diese weitere Mobilfunkteilnehmer-Identifikationskarte von dort zurückgesendet wird.

27. Vorrichtung nach einem der Ansprüche 16 bis 26,
**dadurch gekennzeichnet,**
**dass** die Mobilfunkkurznachrichten-Generationseinrichtung (9,10,11) so ausgebildet ist, dass eine der weiteren Mobilfunkteilnehmer-Identifikationskarten (14,22) nur als nicht in ein Mobilfunknetz eingebucht betrachtet wird, wenn eine Zustellungsinformation vorliegt (31), welche angibt, dass die Mobilfunkkurznachricht noch nicht diese weitere Mobilfunkteilnehmer-Identifikationskarte erreicht hat, während sie (14,22) sonst als eingebucht betrachtet (35) wird.

28. Vorrichtung nach einem der Ansprüche 16 bis 27,
**dadurch gekennzeichnet,**
**dass** in der Liste (25) Mobilfunkteilnehmer-Identifikationskarten in Form ihrer Telefonnummer MSISDN angegeben sind.

## Claims

1. Method for providing information to a subscriber of a first mobile wireless subscriber identification card (3) logged on (4,5,2) to a mobile wireless network (7,21) concerning further mobile wireless subscriber identification cards (14;22) which are currently likewise logged on to a mobile wireless network (7,21),
wherein information (35) is sent (11,10,9,8,7a,6,4) to the first mobile wireless subscriber identification card (3) concerning which (14) of the further mobile wireless subscriber identification cards (14;22) are currently logged on to a mobile wireless network (7;21), **characterised**
**in that** in each case a mobile wireless short message (33) is sent (9,10,11,7a,33) to the further mobile wireless subscriber identification cards (14;22) and
based on delivery information (34;31) resulting from the delivery of the mobile wireless short message to the further mobile wireless subscriber identification cards (14;22), it is established which of the further mobile wireless subscriber identification cards (14;22) are likewise logged on to a mobile wireless network (7;21), this is indicated to the mobile wireless subscriber with the first mobile wireless subscriber identification card (3) and
**in that** additionally a check is made by a Web server with respect to whether the further mobile wireless subscriber identification card (14;22) is also logged on to WAP, this likewise being communicated to the mobile wireless subscriber with the first mobile wireless subscriber identification card (3).

2. Method according to one of the preceding claims,
**characterised**
**in that** the further mobile wireless subscriber identification cards (14;22) to which a mobile wireless short message is to be sent are determined on the basis of a list (25), stored for this purpose, which relates to the first mobile wireless subscriber identification card (3).

3. Method according to Claim 2,
**characterised**
**in that** the list is prepared beforehand by the user (1) of the mobile wireless subscriber identification card (3) and then transmitted to the mobile wireless network (10 or 24) orally or via short message.

4. Method according to one of the preceding claims,
**characterised**
**in that** a mobile wireless short message (33) for determining the further mobile wireless subscriber identification cards (14;22) is sent to the further mobile wireless mobile wireless subscriber identification cards at the time when the first mobile wireless subscriber identification card (3) logs on and/or at specific time intervals.

5. Method according to one of the preceding claims,
**characterised**
**in that** a mobile wireless short message is sent to the further mobile wireless subscriber identification cards (14;22) when requested by the user (1) of the first mobile wireless subscriber identification card (3).

6. Method according to one of the preceding claims,
**characterised**
**in that** a mobile wireless short message is sent only to further mobile wireless subscriber identification cards which are subscribed to the same mobile wireless network (7) as the first mobile wireless subscriber identification card (3).

7. Method according to one of Claims 1 to 6,
**characterised**
**in that** a mobile wireless short message is sent also to further mobile wireless subscriber identification cards (22) which are subscribed to other mobile wireless networks (21) than the mobile wireless network (7) of the first mobile wireless subscriber identification card (3).

8. Method according to one of the preceding claims,
**characterised**
**in that** the mobile wireless short message is a GSM SMS.

9. Method according to one of the preceding claims,
**characterised**
**in that** the mobile wireless short message is a UMTS message.

10. Method according to one of the preceding claims,
**characterised**
**in that** the mobile wireless short message (33) is an empty message without any text to be displayed on a mobile wireless terminal.

11. Method according to one of the preceding claims,
**characterised**
**in that** one of the further mobile wireless subscriber identification cards is considered as logged on to a mobile wireless network when delivery information in the form of an automatically generated reception acknowledgement relating to its receipt on the part of this further mobile wireless subscriber identification card (14,13) is sent back (14,34,7a,11) towards the first mobile wireless subscriber identification card.

12. Method according to one of the preceding Claims 1-10,
**characterised**
**in that** one of the further mobile wireless subscriber identification cards is considered as not logged on to a mobile wireless network only when delivery information in the form of a status flag (31) is present (11) which indicates that the mobile wireless short message has not yet reached this further mobile wireless subscriber identification card, in particular in the form of the message waiting flag in GSM or UMTS,
whereas the further mobile wireless subscriber identification card is otherwise considered (35) as logged on.

13. Method according to one of the preceding claims,
**characterised**
**in that** the further mobile wireless subscriber identification cards are identified in the method in each case on the basis of an identity number, in particular their MSISDN telephone number to which the mobile wireless short message is sent.

14. Method according to one of the preceding claims,
**characterised**
**in that** the providing of information to the first mobile wireless subscriber identification card (3) concerning further mobile wireless subscriber identification cards currently logged on to a mobile wireless network is effected with a mobile wireless short message (35) which is to be displayed optically and/or acoustically on the terminal of the first mobile wireless subscriber identification card to the terminal user (1).

15. Method according to one of the preceding claims,
**characterised**
**in that** the mobile wireless short message transmitted to the further mobile wireless subscriber identification cards to check for log on is transmitted with a sender identity (10) which prevents the first mobile wireless subscriber identification card from receiving an acknowledgement of the receipt of this mobile wireless short message by the further mobile wireless subscriber identification cards.

16. Apparatus for carrying out the method according to one of the preceding claims, for providing information (35) to a subscriber of a first mobile wireless subscriber identification card (3) logged on (4,5) to a mobile wireless network (7,14) concerning further mobile wireless subscriber identification cards (14;22) which are currently likewise logged on to a mobile wireless network,
- with a Web server (10) as mobile wireless subscriber information device for informing the first mobile wireless subscriber identification card (3) about further mobile wireless subscriber identification cards logged on to a mobile wireless network which are determined by the delivery information monitoring device,
**characterised by**
- the Web server (10) as mobile wireless short message generating device for generating mobile wireless short messages to each of the further mobile wireless subscriber identification cards (14;22) and for sending these mobile wireless short messages to these further mobile wireless subscriber identification cards,
- with the Web server (10) as delivery information monitoring device for determining further mobile wireless subscriber identification cards logged on to a mobile wireless network based on delivery information (34;31) resulting from the delivery of the above mobile wireless short message (33) to the further mobile wireless subscriber identification cards (14),
- and passing on the information (35) to the Web server to check whether the further mobile wireless subscriber identification card (14;22) is also logged on to the WAP.

17. Apparatus according to Claim 16,
**characterised**
**in that**
the mobile wireless short message generating device (10) is configured such that the further mobile wireless subscriber identification cards (14;22) to which a mobile wireless short message is to be sent are determinable on the basis of a list (25), stored for this purpose, for the first mobile wireless subscriber identification card.

18. Apparatus according to Claim 17,
**characterised**
**in that**
the list has been prepared by the user (1) of the mobile wireless subscriber identification card (3).

19. Apparatus according to one of Claims 16 to 18,
**characterised**
**in that**
a mobile wireless message is sendable to the further mobile wireless mobile wireless subscriber identification cards at the time when the first mobile wireless subscriber identification card logs on and/or at specific time intervals.

20. Apparatus according to one of Claims 16 to 19,
**characterised**
**in that**
the mobile wireless short message generating device is configured such that a mobile wireless short message is sent to the further mobile wireless subscriber identification cards when requested by the user (1) of the first mobile wireless subscriber identification card (3).

21. Apparatus according to one of Claims 16 to 20,
**characterised**
**in that** the mobile wireless short message generating device is configured such that a mobile wireless short message is sent only to further mobile wireless subscriber identification cards of the list (25) which is subscribed to the same mobile wireless network as the first mobile wireless subscriber identification card.

22. Apparatus according to one of Claims 16 to 21,
**characterised**
**in that** a mobile wireless short message is sent to further mobile wireless subscriber identification cards of the list (25) which are subscribed to other mobile wireless networks than the first mobile wireless subscriber identification card.

23. Apparatus according to one of Claims 16 to 22,
**characterised**
**in that** the mobile wireless short message is a GSM SMS.

24. Apparatus according to one of Claims 16 to 23,
**characterised**
**in that** the mobile wireless short message is a UMTS message.

25. Apparatus according to one of Claims 16 to 24,
**characterised**
**in that** the mobile wireless short message is an empty message without any text to be displayed on a mobile wireless terminal (13).

26. Apparatus according to one of Claims 16 to 25,
**characterised**
**in that** the mobile wireless short message generating device is configured such that one of the further mobile wireless subscriber identification cards is considered as logged on to a mobile wireless network only when delivery information in the form of an automatically generated reception acknowledgement relating to its receipt by this further mobile wireless subscriber identification card is sent back from there.

27. Apparatus according to one of Claims 16 to 26,
**characterised**
**in that** the mobile wireless short message generating device (9,10,11) is configured such that one of the further mobile wireless subscriber identification cards (14,22) is considered as not logged on to a mobile wireless network only when delivery information is present (31) which indicates that the mobile wireless short message has not yet reached this further mobile wireless subscriber identification card, whereas it (14,22) is otherwise considered (35) as logged on.

28. Apparatus according to one of Claims 16 to 27,
**characterised**
**in that** mobile wireless subscriber identification cards are indicated in the list (25) in the form of their MSISDN telephone number.

## Revendications

1. Procédé d'information d'un abonné d'une première carte d'identification d'abonné de téléphonie mobile (3) enregistrée (4, 5, 2) dans un réseau de téléphonie mobile (7, 21) par le biais d'autres cartes d'identification d'abonné de téléphonie mobile (14 ; 22) également enregistrées dans un réseau de téléphonie mobile (7, 21),
une information (35) à ce sujet étant délivrée (11, 10, 9, 8, 7a, 6, 4) à la première carte d'identification d'abonné de téléphonie mobile (3) indiquant lesquelles (14) des autres cartes d'identification d'abonné de téléphonie mobile (14 ; 22) sont actuellement enregistrées dans un réseau de téléphonie mobile (7, 21),
**caractérisé en ce**
**qu'**un message court de téléphonie mobile (33) est respectivement envoyé (9, 10, 11, 7a, 33) aux autres cartes d'identification d'abonné de téléphonie mobile (14 ; 22) et, sur la base d'informations de remise (34 ; 31) qui résultent de la remise du message court de téléphonie mobile aux autres cartes d'identification d'abonné de téléphonie mobile (14 ; 22), il est constaté lesquelles des autres cartes d'identification d'abonné de téléphonie mobile (14 ; 22) sont également enregistrées dans un réseau de téléphonie mobile (7, 21), cela est indiqué à l'abonné de téléphonie mobile avec la première carte d'identification d'abonné de téléphonie mobile (3), et
en ce que, en plus, un serveur web contrôle si l'autre carte d'identification d'abonné de téléphonie mobile (14 ; 22) est également enregistrée dans le WAP, cela étant également communiqué à l'abonné de téléphonie mobile avec la première carte d'identification d'abonné de téléphonie mobile (3).

2. Procédé selon une des revendications précédentes,
**caractérisé en ce que**
les autres cartes d'identification d'abonné de téléphonie mobile (14 ; 22) auxquelles un message court de téléphonie mobile doit être envoyé sont définies sur la base d'une liste (25) mise en mémoire pour cela et concernant la première carte d'identification d'abonné de téléphonie mobile (3).

3. Procédé selon la revendication 2,
**caractérisé en ce que**
la liste est établie préalablement par l'utilisateur (1) de la carte d'identification d'abonné de téléphonie mobile (3) et est ensuite transmise dans le réseau de téléphonie mobile (10 ou 24) verbalement ou bien par message court.

4. Procédé selon une des revendications précédentes,
**caractérisé en ce**
**qu'**un message court de téléphonie mobile (33) est, à l'occasion de l'enregistrement de la première carte d'identification d'abonné de téléphonie mobile (3) et/ou à des intervalles de temps définies, envoyé aux autres cartes d'identification d'abonné de téléphonie mobile (14 ; 22) pour la détermination des autres cartes d'identification d'abonné de téléphonie mobile.

5. Procédé selon une des revendications précédentes,
**caractérisé en ce**
**qu'**un message court de téléphonie mobile est envoyé aux autres cartes d'identification d'abonné de téléphonie mobile (14 ; 22) sur demande de l'utilisateur (1) de la première carte d'identification d'abonné de téléphonie mobile (3).

6. Procédé selon une des revendications précédentes,
**caractérisé en ce**
**qu'**un message court de téléphonie mobile n'est envoyé qu'aux autres cartes d'identification d'abonné de téléphonie mobile qui sont souscrites dans le même réseau de téléphonie mobile (7) que la première carte d'identification d'abonné de téléphonie mobile (3).

7. Procédé selon une des revendications 1 à 6,
**caractérisé en ce**
**qu'**un message court de téléphonie mobile est envoyé également à d'autres cartes d'identification d'abonné de téléphonie mobile (22) qui sont souscrites dans d'autres réseaux de téléphonie mobile (21) que le réseau de téléphonie mobile (7) de la première carte d'identification d'abonné de téléphonie mobile (3).

8. Procédé selon une des revendications précédentes,
**caractérisé en ce que**
le message court de téléphonie mobile est un GSM-SMS.

9. Procédé selon une des revendications précédentes,
**caractérisé en ce que**
le message court de téléphonie mobile est un message UMTS.

10. Procédé selon une des revendications précédentes,
**caractérisé en ce que**
le message court de téléphonie mobile (33) est un message vide sans texte à représenter côté terminal de téléphonie mobile.

11. Procédé selon une des revendications précédentes,
**caractérisé en ce**
**qu'**une des autres cartes d'identification d'abonné de téléphonie mobile est considérée comme enregistrée dans un réseau de téléphonie mobile si une information de remise sous forme d'accusé de réception généré automatiquement concernant sa réception de la part de cette autre carte d'identification d'abonné de téléphonie mobile (14, 13) est renvoyée (14, 34, 7a, 11) en direction de la première carte d'identification d'abonné de téléphonie mobile.

12. Procédé selon une des revendications précédentes 1-10,
**caractérisé en ce**
**qu'**une des autres cartes d'identification d'abonné de téléphonie mobile n'est considérée comme non enregistrée dans un réseau de téléphonie mobile qu'en présence (11) d'une information de remise sous forme d'indicateur de statut (31) qui indique que le message court de téléphonie mobile n'a pas encore atteint cette autre carte d'identification d'abonné de téléphonie mobile, en particulier sous forme d'indicateur Message-Waiting dans GSM ou UMTS,
alors que l'autre carte d'identification d'abonné de téléphonie mobile est par ailleurs considérée (35) comme enregistrée.

13. Procédé selon une des revendications précédentes,
**caractérisé en ce que**
les autres cartes d'identification d'abonné de téléphonie mobile sont, dans le procédé, identifiées respectivement sur la base d'un numéro d'identité, en particulier de son numéro de téléphone MSISDN, auquel est envoyé le message court de téléphonie mobile.

14. Procédé selon une des revendications précédentes,
**caractérisé en ce que**
l'information de la première carte d'identification d'abonné de téléphonie mobile (3) s'effectue par le biais d'autres cartes d'identification d'abonné de téléphonie mobile enregistrées actuellement dans un réseau de téléphonie mobile avec un message court de téléphonie mobile (35) à indiquer à l'utilisateur (1) du terminal par voie optique et/ou acoustique sur le terminal de la première carte d'identification d'abonné de téléphonie mobile.

15. Procédé selon une des revendications précédentes,
**caractérisé en ce que**
le message court de téléphonie mobile transmis aux autres cartes d'identification d'abonné de téléphonie mobile pour le contrôle d'enregistrement est transmis avec une identité d'expéditeur (10) qui évite que la première carte d'identification d'abonné de téléphonie mobile reçoive un accusé portant sur la réception de ce message court de téléphonie mobile par les autres cartes d'identification d'abonné de téléphonie mobile.

16. Dispositif pour la réalisation du procédé selon une des revendications précédentes, pour l'information (35) d'un abonné d'une première carte d'identification d'abonné de téléphonie mobile (3) enregistrée (4, 5) dans un réseau de téléphonie mobile (7, 14) par le biais d'autres cartes d'identification d'abonné de téléphonie mobile (14 ; 22) également enregistrées dans un réseau de téléphonie mobile
- avec un serveur Web (10) en tant que dispositif d'information d'abonné de téléphonie mobile pour l'information de la première carte d'identification d'abonné de téléphonie mobile (3) portant sur d'autres cartes d'identification d'abonné de téléphonie mobile constatées avec le dispositif de surveillance de l'information de remise et enregistrées dans un réseau de téléphonie mobile,
**caractérisé par**
- le serveur Web (10) en tant que dispositif de génération de messages courts de téléphonie mobile pour la génération de messages courts de téléphonie mobile à chacune des autres cartes d'identification d'abonné de téléphonie mobile (14 ; 22) et pour l'envoi de ces messages courts de téléphonie mobile à ces autres cartes d'identification d'abonné de téléphonie mobile,
- avec le serveur Web (10) en tant que dispositif de surveillance des informations de remise pour la constatation d'autres cartes d'identification d'abonné de téléphonie mobile enregistrées dans un réseau de téléphonie mobile sur la base d'informations de remise (34 ; 31) qui résultent de la remise du message court de téléphonie mobile (33) mentionné ci-dessus aux autres cartes d'identification d'abonné de téléphonie mobile (14),
- et acheminement de l'information (35) au serveur Web pour vérifier si l'autre carte d'identification d'abonné de téléphonie mobile (14 ; 22) est également enregistrée dans le WAP.

17. Dispositif selon la revendication 16,
**caractérisé en ce que**
le dispositif de génération de message court de téléphonie mobile (10) est constitué de telle sorte que les autres cartes d'identification d'abonné de téléphonie mobile (14 ; 22) auxquelles un message court de téléphonie mobile doit être envoyé peuvent être définies sur la base d'une liste (25) mise en mémoire pour cela pour la première carte d'identification d'abonné de téléphonie mobile.

18. Dispositif selon la revendication 17,
**caractérisé en ce que**
la liste (25) a été établie par l'utilisateur (1) de la carte d'identification d'abonné de téléphonie mobile (3).

19. Dispositif selon une des revendications 16 à 18,
**caractérisé en ce**
**qu'**un message court de téléphonie mobile peut être envoyé aux autres cartes d'identification d'abonné de téléphonie mobile lors de l'enregistrement de la première carte d'identification d'abonné de téléphonie mobile et/ou à certains intervalles de temps.

20. Dispositif selon une des revendications 16 à 19,
**caractérisé en ce que**
le dispositif de génération de messages courts de téléphonie mobile est constitué de telle sorte qu'un message court de téléphonie mobile est envoyé aux autres cartes d'identification d'abonné de téléphonie mobile sur demande de l'utilisateur (1) de la première carte d'identification d'abonné de téléphonie mobile (3).

21. Dispositif selon une des revendications 16 à 20,
**caractérisé en ce que** le dispositif de génération de messages courts de téléphonie mobile est constitué de telle sorte qu'un message court de téléphonie mobile n'est envoyé qu'à d'autres cartes d'identification d'abonné de téléphonie mobile de la liste (25) qui est souscrite dans le même réseau de téléphonie mobile que la première carte d'identification d'abonné de téléphonie mobile.

22. Dispositif selon une des revendications 16 à 21,
**caractérisé en ce qu'**un message court de téléphonie mobile est envoyé à d'autres cartes d'identification d'abonné de téléphonie mobile de la liste (25) qui sont souscrites dans d'autres réseaux de téléphonie mobile que la première carte d'identification d'abonné de téléphonie mobile.

23. Dispositif selon une des revendications 16 à 22,
**caractérisé en ce que**
le message court de téléphonie mobile est un GSM-SMS.

24. Dispositif selon une des revendications 16 à 23,
**caractérisé en ce que**
le message court de téléphonie mobile est un message UMTS.

25. Dispositif selon une des revendications 16 à 24,
**caractérisé en ce que**
le message court de téléphonie mobile est un message vide sans texte à représenter côté terminal de téléphonie mobile (13).

26. Dispositif selon une des revendications 16 à 25,
**caractérisé en ce que**
le dispositif de surveillance des informations de remise est constitué de telle sorte qu'une des autres cartes d'identification d'abonné de téléphonie mobile n'est considérée comme enregistrée dans un réseau de téléphonie mobile que si une information de remise sous forme d'accusé de réception généré automatiquement concernant sa réception est renvoyée à partir de là par cette autre carte d'identification d'abonné de téléphonie mobile.

27. Dispositif selon une des revendications 16 à 26,
**caractérisé en ce que**
le dispositif de génération de messages courts de téléphonie mobile (9, 10, 11) est constitué de telle sorte qu'une des autres cartes d'identification d'abonné de téléphonie mobile (14, 22) n'est considérée comme non enregistrée dans un réseau de téléphonie mobile qu'en présence d'une information de remise (31) qui indique que le message court de téléphonie mobile n'a pas encore atteint cette autre carte d'identification d'abonné de téléphonie mobile, alors qu'elle (14, 22) est par ailleurs considérée (35) comme enregistrée.

28. Dispositif selon une des revendications 16 à 27,
**caractérisé en ce que**,
dans la liste (25), des cartes d'identification d'abonné de téléphonie mobile sont indiquées sous forme de leur numéro téléphone MSISDN.
